# EUROPÄISCHE PATENTSCHRIFT

(11) **EP 0 761 489 B1**
(45) Veröffentlichungstag und Bekanntmachung des Hinweises auf die Patenterteilung: **03.11.1999**
(21) Anmeldenummer: 96109762.3
(22) Anmeldetag: 18.06.1996
(51) Int. Cl.: B60K 28/00, F02M 13/08

(54) **Brennstoff-System in einem Kraftfahrzeug**
Fuel system in a motor vehicle
Système de carburant dans une automobile

(30) Priorität: 08.09.1995 DE 19533324
(43) Veröffentlichungstag der Anmeldung: 12.03.1997
(73) Patentinhaber: Bayerische Motoren Werke Aktiengesellschaft, 80788 München (DE)
(72) Erfinder: Langen, Peter, 80935 München (DE)

(56) Entgegenhaltungen:
- US-A- 4 373 493
- PATENT ABSTRACTS OF JAPAN vol. 007, no. 009 (M-185), 14.Januar 1983 & JP 57 168036 A (KUBOTA TEKKO KK), 16.Oktober 1982,
- PATENT ABSTRACTS OF JAPAN vol. 012, no. 105 (M-681), 6.April 1988 & JP 62 237046 A (YANMAR DIESEL ENGINE CO LTD;OTHERS: 03), 17.Oktober 1987,

## Beschreibung

Die Erfindung bezieht sich auf ein Brennstoff-System in einem Kraftfahrzeug nach dem Oberbegriff des Patentanspruches 1.

Ein mit einem derartigen Brennstoff-System ausgerüstetes Fahrzeug ist in der EP 0 211 115 A1 beschrieben. Das Kraftfahrzeug kann wahlweise sowohl mit Benzin als auch mit komprimiertem Erdgas (CNG) betrieben werden. Sowohl in der Benzinleitung als auch in der CNG-Leitung sind elektromagnetisch betätigbare Absperrventile vorgesehen, um das Umschalten des Systems von dem einen Kraftstoff auf den anderen zu ermöglichen.

Es ist ferner bekannt (DE 31 16 867 A1), die Benzinversorgung einer Brennkraftmaschine eines Fahrzeugs durch einen Verzögerungssensor (Crash-Sensor) zu unterbrechen, wenn das Kraftfahrzeug bestimmten Verzögerungswerten ausgesetzt ist.

Man könnte nun daran denken, bei einem beispielsweise mit Benzin und Erdgas betriebenen Kraftfahrzeug beide Brennstoffzuführungen durch einen Crash-Sensor zu unterbrechen, wenn der Crash-Sensor anspricht. Bei eventuellen Fehlauslösungen des Crash-Sensors führt dies jedoch zum Liegenbleiben des Fahrzeugs.

Der Erfindung liegt die Aufgabe zugrunde, ein Brennstoff-System der vorausgesetzten Bauart zu schaffen, das einerseits bei einer Fehlauslösung des Sensors weiterbetrieben werden kann und das andererseits im Crash-Fall kein höheres Schadensrisiko birgt.

Diese Aufgabe wird erfindungsgemäß bei einem in einem Fahrzeug installierten Brennstoff-System, das mit zwei unterschiedlichen Kraftstoffarten betrieben werden kann, dadurch gelöst, daß das System einen Crash-Sensor aufweist, der ab bestimmten Verzögerungswerten anspricht und dabei von dem Brennstoff mit dem höheren Schadensrisiko auf den anderen Brennstoff umschaltet, dessen Zufuhr zur Brennkraftmaschine nicht unterbrochen wird. Bei einem Fahrzeug, das beispielsweise mit Benzin und ferner mit komprimiertem Erdgas als weiteren Brennstoff betrieben werden kann, wird beim Ansprechen des Crash-Sensors die Erdgaszufuhr unterbrochen.

Bei einer eventuell möglichen Fehlauslösung des Crash-Sensors wird dadurch selbsttätig das Erdgas-Brennstoff-System, das unter Umständen unter einem sehr hohen Druck stehen kann, abgeschaltet und die Brennkraftmaschine auf Benzinbetrieb umgeschaltet. Damit ist jedes zusätzliche Risiko, das durch das Erdgassystem im Falle eines Crashs entstehen könnte, ausgeschaltet und das Gesamtsystem risikoarm einzustufen. Nach einer eventuellen Fehlauslösung des Crash-Sensors bleibt das Fahrzeug nicht liegen, da das Brennstoff-System in diesem Fall dann auf Benzin umgeschaltet wird. Das Fahrzeug kann daher auch im Fall einer Fehlauslösung des Sensors weiterbetrieben werden.

## Patentansprüche

1. Brennstoff-System in einem Kraftfahrzeug, dessen Brennkraftmaschine sowohl mit Benzin oder Dieselkraftstoff als auch mit einem weiteren Brennstoff, insbesondere Erdgas, wahlweise betrieben werden kann, wobei die zwei verwendeten Brennstoffarten ein verschieden hohes Schadensrisiko beinhalten,
dadurch gekennzeichnet, daß das System einen Crash-Sensor aufweist, der ab bestimmten Verzögerungswerten anspricht und dabei von dem Brennstoff mit dem höheren Schadensrisiko auf den anderen Brennstoff umschaltet, dessen Zufuhr zur Brennkraftmaschine nicht unterbrochen wird.

2. Brennstoff-System nach Anspruch 1, für ein Kraftfahrzeug, das mit komprimiertem Erdgas als weiteren Brennstoff betreibbar ist,
dadurch gekennzeichnet, daß beim Ansprechen des Crash-Sensors die Erdgas-Zufuhr unterbrochen wird.

## Claims

1. A fuel system in a motor vehicle having an engine which can be selectively operated on petrol or diesel fuel or on another fuel, especially natural gas, wherein the two kinds of fuel present different degrees of risk of injury,
characterised in that the system comprises a crash sensor which responds when the deceleration exceeds given values and switches over from the fuel presenting the higher risk to the other fuel, without interrupting the supply thereof to the engine.

2. A fuel system according to claim 1 for a motor vehicle which can be operated on an additional fuel in the form of compressed natural gas,
characterised in that when the crash sensor responds, the supply of natural gas is interrupted.

## Revendications

1. Système de carburant alimentant un véhicule automobile dont le moteur à combustion interne peut fonctionner à la fois avec de l'essence ou du gasoil, et avec un autre carburant, notamment du gaz naturel, et cela au choix, les deux types de carburant représentant des risques d'incident de niveaux différents,
caractérisé en ce que
le système comporte un capteur de collision qui se met en oeuvre à partir de certaines valeurs de décélération et qui passe ainsi d'une alimentation en carburant présentant le risque d'incident le plus élevé à une alimentation avec l'autre carburant dont l'envoi vers le moteur à combustion interne n'est pas interrompu.

2. Système de carburant selon la revendication 1 pour un véhicule automobile fonctionnant avec du gaz naturel comprimé comme autre carburant,
caractérisé en ce qu'
en cas de mise en oeuvre du capteur de collision on coupe l'alimentation en gaz naturel.
